# EUROPEAN PATENT APPLICATION

(11) **EP 2 602 596 A1**
(43) Date of publication of application: **12.06.2013**
(21) Application number: 11192840.4
(22) Date of filing: 09.12.2011
(51) Int. Cl.: G01F 1/66

(54) **Ultrasonic flow meter on a PCB**

(71) Applicant: Kamstrup A/S, 8660 Skanderborg (DK)
(72) Inventor: Laursen, Peter Schmidt, 8660 Skanderborg (DK)
(74) Representative: Plougmann & Vingtoft A/S

(57) **Abstract**

The invention relates to an ultrasonic flow meter unit arranged to measure a flow rate of a fluid. The meter unit comprising one or more ultrasonic transducers in the form of monolithic bodies of piezo-electric material and a printed circuit board with an electronic circuit for operating the ultrasonic transducer(s). The ultrasonic transducer(s) being mechanically fixed to the circuit board by an electrically conducting fixing means which provides the electrical connection to the electronic circuit. The transducer is covered by a membrane adhered to the second side, so that the transducer front can be exposed directly to a flowing fluid. The present invention provides an ultrasonic flow meter unit built on a single printed circuit board.

## Description

### FIELD OF THE INVENTION

The present invention relates to an ultrasonic flow meter unit built on a single printed circuit board.

### BACKGROUND OF THE INVENTION

In an ultrasonic flow meter, ultrasonic transducers are mounted to a flow channel in a way so that ultrasonic signals can be introduced into the flow channel and travel along a measuring section to be detected after the passage. The operation of the ultrasonic transducers is controlled by an electronic circuit, electrically connected to the transducers. The transducers, the electronic circuit, and possible other components are mounted together with a flow tube to form a complete flow meters as a collection of parts.

In many flow meters, the transducer is a piezoelectric element mounted as a sub-assembly in a separate unit, a so-called transducer unit, where the piezoelectric element is mounted together with holder elements, contact elements, connection wires etc., to provide a complete unit which can be connected to the electronic circuit by connection wires. A flow meter with transducer units is made of a number of parts, which need to be fabricated separately and combined in a mount process. An example of such a transducer unit is disclosed in EP 1 315 144 B1, where a membrane is used as the second electrode of the piezo-electric material. However, the disclosure is directed to a sub-assembly which is to be mounted on the flow tube separate from the electronic circuit, and connected by means of a separate connector.

An alternative way of connecting the ultrasonic transducers and the control circuit is disclosed in WO 2010/112030. In this disclosure, the ultrasonic transducers are mechanically fixed directly on the circuit board by use of electrical conducting fixing means, and the circuit board is mounted on the flow channel in a way so that the transducers can emit ultrasonic signals into the flow passage. A sub-assembly which combines the mounting and connection of the piezo-element and the electronic circuit is thereby obtained. However, to test the sub-assembly in a fluid flow, further steps need to be performed to ensure that the piezo-elements and the electronic components are not exposed directly to the flowing fluid.

### SUMMARY OF THE INVENTION

It would be advantageous to achieve a flow meter unit which is both suitable for effective automatic production, and where the sub-assembly can be tested in a simple manner before final assembly of the flow meter. In general it is an object of the present invention to provide an alternative to known flow meters, which facilitate highly automated production.

In accordance with a first aspect of the invention, there is provided an ultrasonic flow meter unit arranged to measure a flow rate of a fluid, the meter unit comprising:
- a first ultrasonic transducer in the form of a monolithic body of piezo-electric material, the first ultrasonic transducer has a first and a second side, and a first and second electrical terminal, and
- a printed circuit board with an electronic circuit for operating the first ultrasonic transducer, the circuit board comprises a first conducting path electrically connected to the first electrical terminal and to the electronic circuit, and
   wherein the ultrasonic transducer is mechanically fixed to the circuit board by a first electrically conducting fixing means which provides the electrical connection between the first electrical terminal and the first conducting path, and
   wherein the first ultrasonic transducer is positioned on the printed circuit board with the first side of the transducer in contact with printed circuit board, and with the second side of the transducer being covered by a membrane adhered to the second side.

In effect, the present invention provides a complete flow meter on a PCB which is capable of direct exposure of the transducer front to the flowing fluid, in the sense that the flow meter unit merely needs to be mounted on a flow tube in order to act as a flow meter, since due to the presence of the membrane, the transducer front can be exposed directly to the flowing fluid. Naturally in order to provide a flow meter suitable for installation at the end-user, further elements are needed, such as a casing, a calculator unit, a means for fixing the flow meter element on the flow tube, etc. However, in connection with factory testing, the core elements of the final flow meter can be tested as an assembly, and in particular, all elements which influences the ultrasonic signal can be tested in the final assembled state.

An important aspect of the present invention is that the complete flow meter unit can be fabricated in a single Surface Mount Technology (SMT) assembly process, and even by use of a single Surface

Mount Robot also referred to as a pick-and-place robot. The flow meter unit may thus be completely fabricated as a Surface Mount Device (SMD) in a single assembly process.

The flow meter unit may be mounted onto a flow tube to provide a flow meter.

In a second aspect, there is provided a method of manufacturing an ultrasonic flow meter unit, the method comprising:
- providing a first ultrasonic transducer in the form of a monolithic body of piezo-electric material, the ultrasonic transducer has a first and a second side, and a first and second electrical terminal,
- providing a printed circuit board with an electronic circuit for operating the first ultrasonic transducer, the circuit board comprises a first conducting path electrically connected to the first electrical terminal and to the electronic circuit,
- mounting the first side of an ultrasonic transducer with a membrane adhered to the second side onto the printed circuit board, or mounting the first side of the ultrasonic transducer onto the printed circuit board and adhere a membrane to the second side of the ultrasonic transducer,
- wherein the ultrasonic transducer is mechanically fixed to the circuit board by a first electrically conducting fixing means which provides the electrical connection between the first electrical terminal and the first conducting path.

In an important embodiment, the steps are performed in a Surface Mounting Technology process.

By mounting the ultrasonic flow meter unit in relation to a housing flow tube, a flow meter is provided.

In embodiments, the ultrasonic flow meter may be or may be part of a charging consumption meter, e.g. a water meter, gas meter, heat meter, cooling meter, or energy meter, where the consumption meter is arranged for measuring consumption data of a supplied utility used as a basis for billing. The consumption meter may be used in connection with district heating or district cooling. The consumption meter may be a legal meter, i.e. a meter which is subdued to regulatory demands. Such regulatory demands may be demands to the precision of the measurements.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figs. 1 to 3 illustrate different views of an ultrasonic flow meter unit where components of the electronic circuit and the piezo-electrical transducers are provided on different sides of the PCB;
Figs. 4 and 5 illustrate different views of an ultrasonic flow meter unit where components of the electronic circuit and the piezo-electrical transducers are provided on the same sides of the PCB;
Figs. 6A to 6D illustrate examples of different types of piezo-terminal configurations and membranes, as well as different examples of the contacting of the two electrodes of the piezo-electrical transducer to the electronic circuit;
Figs. 7 and 8 illustrate embodiments of the ultrasonic flow meter unit mounted on a flow a flow tube to provide an ultrasonic flow meter; and
Figs. 9 and 10 illustrate schematic cross-sectional views of the flow meter unit mounted onto the flow tube 13.

### DESCRIPTION OF EMBODIMENTS

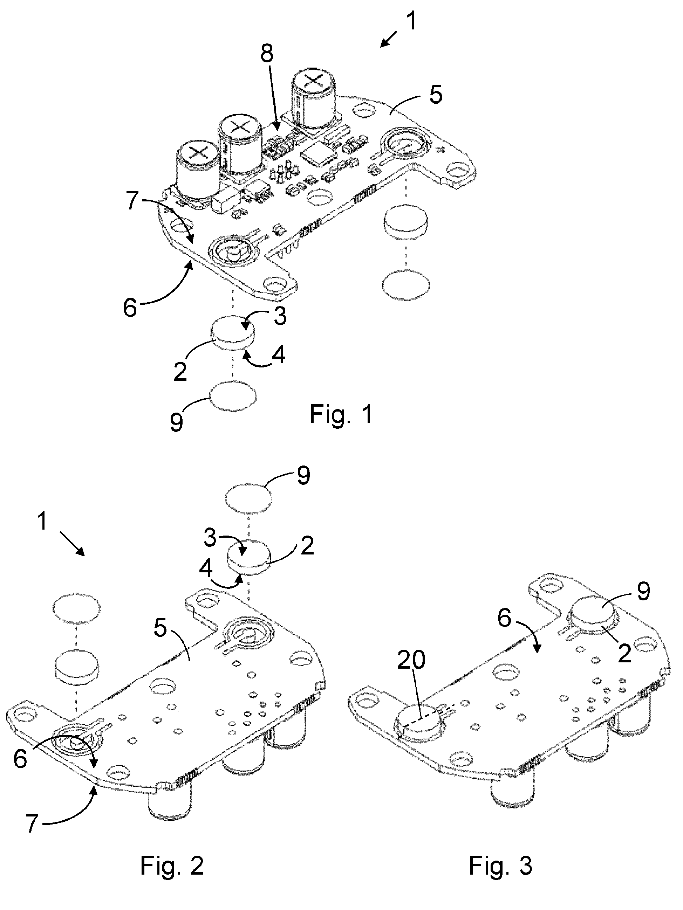

Figs. 1 to 3 illustrate different views of an ultrasonic flow meter unit in accordance with embodiments of the present invention. The figures illustrate the ultrasonic flow meter unit 1 with two ultrasonic transducers 2 in the form of monolithic bodies of piezo-electric material, such as of a ceramic material, e.g. lead zirconate titanate (PZT) based material. Each transducer has a first 3 and a second side 4. Each side is connected to an electrical terminal, and depending on the type of the transducer element, the terminals may be placed on different sides or one of the terminals may extend beyond a side either to the periphery or to the other side. Thus, the transducer element may be provided with plane parallel terminals or wrap-around types of terminals. Moreover the unit has a printed circuit board PCB 5 with a first side 6 and a second side 7. In general one or more transducers may be present, in many embodiments the transducers are arranged in pairs. In the current examples, a single pair of transducers is illustrated. The printed circuit board comprises an electronic circuit 8 for operating the ultrasonic transducers. The circuit board is provided with a (first) conducting path for electrically connecting the first electrical terminal and the electronic circuit.

Figs. 1 and 2 illustrate exploded views of the flow meter unit as seen from the second side in Fig. 1 and from the first side in Fig. 2. In Fig. 3, the flow meter unit as seen from the first side is illustrated with the transducers fixed to the PCB. The transducers are mechanically fixed to the circuit board by an electrically conducting fixing means which provides both the mechanical fixing and the electrical connection between the first electrical terminal and the first conducting path. The fixing means may be such fixing means as clips, solder, glue, etc. The mounting of monolithic piezo elements on a PCB is disclosed in the published international PCT application WO 2010/112030, and the disclosure therein applies mutatis mutandis to embodiments of the present invention.

As can be seen in Figs. 1 to 3 all components of the electronic circuit for operating the first ultrasonic transducer is positioned on the second side of the PCB, whereas the ultrasonic transducers are positioned on the first side of the PCB with the first side of the transducer in contact with the first side of the printed circuit board. By placing all electronic components on one side, and only the piezo-electric transducers on the other side, the flow meter unit can be positioned on the flow tube without risk of damaging the electronic components when pressing the transducers towards the flow tube, either in connection with test or in connection with final assembly. The second side 4 of the transducer is covered by a membrane 9 adhered to the second side. The membrane may be adhered by any suitable adhesive suitable for attaching the membrane to the piezo-electric transducer element. Suitable adhesives include, but are not limited to, solder material suitable for use in an SMD process, liquid adhesives in the form of natural or synthetic glues, such as monomer or polymer-based glues, such as vinyl-based glues, epoxies, including epoxy mixtures, such as epoxy mixed with rubber powder. The glue may be mixed with a conductive material to render it conductive.

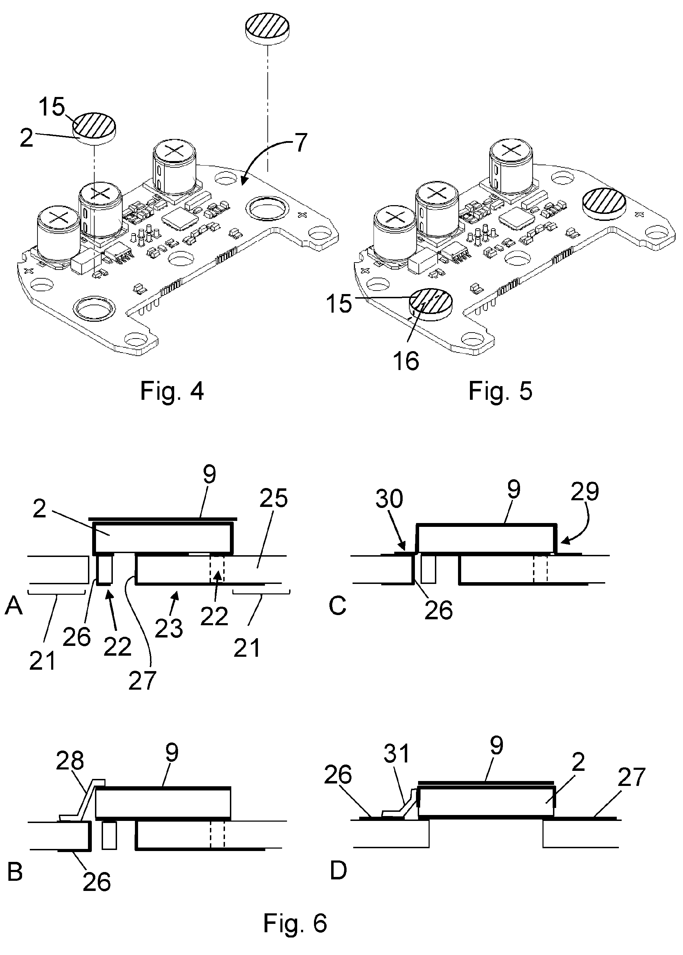

Figs. 4 and 5 illustrate another embodiment of the flow meter unit. In these figures, the transducers are fixed to the circuit board on the same side, i.e. on the second side, as the electronic circuit for operating the transducer. In this manner, the PCB need not be turned during the mount process. Fig. 4 illustrates the flow meter unit in an exploded view with the transducers separated from the PCB, whereas Fig. 5 illustrates the mounted flow meter unit with the transducer mounted over through-going holes in the PCB.

Another difference in Figs. 4 and 5 as compared to Figs. 1 to 3, is, as shown in Figs. 1 to 3, the membrane 9 is a separate component from the transducer 2. In Figs. 4 and 5 the membrane 15 is provided onto the transducer 2 in a pre-mount step.

The membrane may in different embodiments be provided by any suitable material which can with stand direct expose to the flowing fluid, which can be adhered to the front face of the piezo-electric transducer element, and which does not affect the ultrasonic signal in a problematic manner.

In an embodiment the membrane is a sheet of metal, typically up to a few hundreds of micro-meters thick. For example a membrane of stainless steel, but other metals may be used. A sheet metal membrane may either be mounted during the SMD assembly or in a pre-mount step.

Pre-mounted membranes may exhibit a greater freedom in how they are provided. In an embodiment, the membrane may be a layer deposited onto the second side of the transducer. The deposited membrane may be a sufficient resistant metal or metal alloy layer, however also such materials as glasses or metal oxides may be deposited to provide a membrane which can resist direct fluid contact. The deposited membrane may in embodiments also provide a terminal for the piezo-transducer. However, the membrane may also be deposited onto a separately provided terminal.

Figs. 6A to 6D illustrate examples of different types of piezo-terminal configurations and membranes, as well as different examples of the contacting of the two electrodes of the piezo-electrical transducer to the electronic circuit. The examples of Figs. 6A to 6C illustrate the PCB geometry of Figs. 1 to 3, whereas the example of Fig 6D illustrates the PCB geometry of Figs. 4 and 5. It is noted that it is within the capability of the skilled person to use different geometries, in particular in the light of WO 2010/112030 which discloses several examples of the PCB geometry. Likewise, it is also within the capability of the skilled person to use different ways of contacting the electrical terminals to the electronic circuit than illustrated in these figures, as well as to combine and inter-change specific features shown in the different embodiments.

The examples of Figs. 6A to 6C are shown for a cross-section obtained along the line 20 shown on Fig. 3. The PCB area 21 surrounding the piezo-element forms part of the general PCB, whereas the holder ring 22 and the tongue area 23 are also shown, in accordance with Figs. 2 and 3. This PCB geometry is advantageous, since it allows for slight size variations of the piezo-element.

In Fig. 6A the piezo-element 2 is of the so-called wrap around type, where the terminals of the piezo-element are configured so that they are accessible from one side. Since the electronic circuit and the transducers are positioned on different sides of the PCB, the PCB comprises through going holes which comprises a conductive path which extent through it from the first side to the second side.

In the figure, the front electrode is contacted to a conducting path 26 which is led through the hole in the PCB so that the front terminal can be contacted to the electronic circuit from the backside of the PCB. The centre-electrode on the back side of the piezo-element is contacted via a conducting path 27 on the tongue which is also led through a hole in the PCB to be contacted to the electronic circuit. Both electrical terminals of the piezo-element are thus contacted to conducting paths on the PCB and reachable from the back-side or second side of the PCB. The front electrode may alternatively, through the membrane, be contacted to a common ground, so that a dedicated conducting path to the electronic circuit may be avoided for this terminal. The membrane 9 is attached to the front-electrode of the piezo-element. The membrane is shown slightly separated from the front terminal for illustrative reasons, in a working embodiment, the membrane would be firmly adhered to the front electrode. In embodiments, the piezo-element may be adhered to the PCB by means of solder arranged along the surface of the holder ring 22 as well as on the centre part of the surface of the tongue 23. In an alternative embodiment, the conductive path may also bridge the first and the second side at the edge of the PCB.

In Fig. 6B, the terminal configuration of the piezo-element is of a type where each side of the element is covered with a plane parallel electrode. The front terminal is connected by means of a clips 28 that connects the membrane 9 (which is electrically connected to the front terminal) and a conducting path 26 on the PCB.

In Figs. 6A and 6B, the membrane is disc shaped and covers the front side of the piezo-element. In Fig. 6C, the membrane bowl-shaped and extends beyond the front side of the piezo-element and down the peripheral side 29 of the piezo-disc. In the illustrated embodiment, the membrane extends beyond 30 the peripheral side to also cover part of the PCB, however the membrane may also merely cover the peripheral side of the piezo-disc. In a situation where the membrane 30 extends to the PCB, as in Fig. 6C, the front electrode may be connected to a conducting path on the PCB via the part 30 of the membrane which extends past the piezo-element. This connection may be made by use of solder or another conducting adhesive, or it may be made in connection with the mounting of the flow meter unit to a flow tube, since when mounted the unit is pressed firmly towards the flow tube, thereby ensuring an electrical connection to the front terminal of the piezo-element.

Fig. 6D illustrates an example obtained along the line 16 shown on Fig. 5. Here the piezo element 2 is mounted over a through-going circular hole in the PCB and adhered at the edge region by soldering. In an example, the bottom terminal is connected to a conducting path 27 on the front side of the PCB, whereas the top terminal is connected to another conducting path 26 on the PCB by use of a clip 31 which connect to the side of the top terminal in the form of a wrap around terminal. The membrane 9 may be a pre-deposited layer (here shown separate from the top terminal).

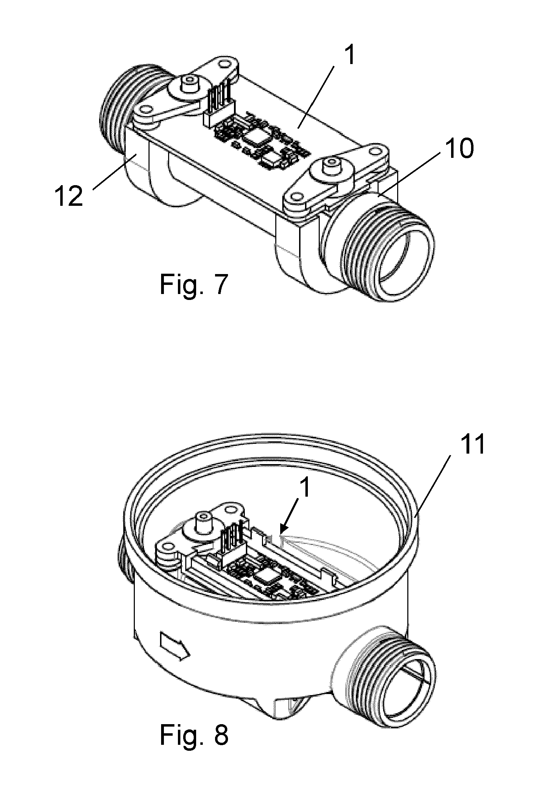

Figs. 7 and 8 illustrate embodiments of ultrasonic flow meter. The figures illustrate a flow meter unit 1 similar to the unit illustrated in Figs. 1 to 3 mounted onto a flow tube 10, 11. In Fig. 7, the flow meter unit is mounted directly onto a flow tube 10 and fixed to the flow tube by means of bracings 12. In Fig. 8, the flow meter unit is mounted onto a flow tube 11 integrally formed together with a housing.

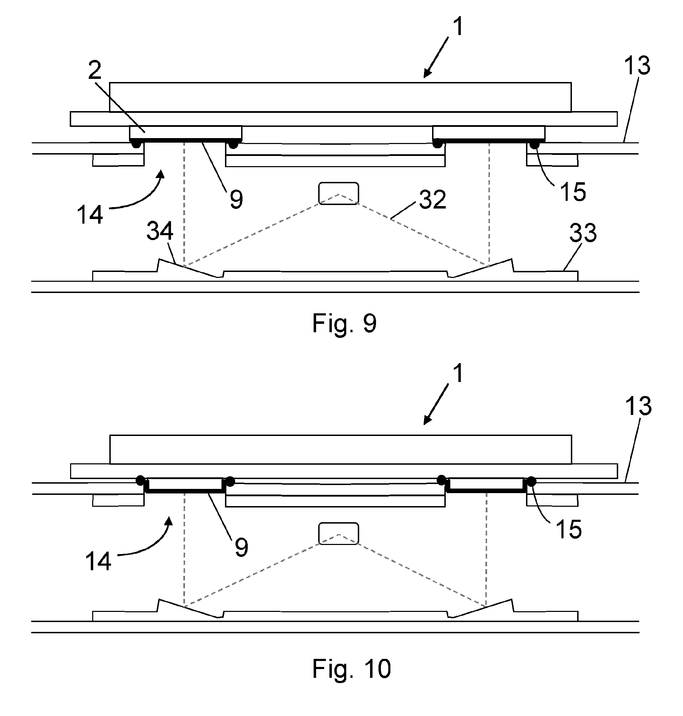

Figs. 9 and 10 illustrate schematic cross-sectional views of the flow meter unit mounted onto the flow tube 13. The flow meter unit is arranged in relation to the flow tube so that the ultrasonic transducers are arranged in the through-going opening 14 in the wall of the flow tube 13. Due to the through-going openings 14, the membranes 9 are directly exposed to the flowing fluid in the flow tube.

To prevent fluid leak from the flow tube, a sealing member 15, typically in the form of an O-ring is used. In Fig. 9 the sealing element lays against the front side of the membrane, and between the membrane and the flow tube. A track may be provided in the flow tube to provide a seat or support face for the sealing member. In Fig. 10 the sealing element lays against the membrane on the circumferential part of the transducer, i.e. at the side of the transducer and the flow tube. Also in this situation may a seat or support face for the sealing member be provided in the flow tube.

The ultrasonic flow meter unit may form part of a transit time flow meter arranged to measure a flow rate of a fluid flowing in the flow tube 13 by use of the known operation principle for transit time flow meters, where ultrasonic signals 32 are emitted at one transducer and received at the other transducer, and where the difference in time-of-arrival between oppositely propagating signals is measured and converted into a flow rate. Also shown is a flow insert 33 which comprises reflectors 34 for directing the signal along a measuring distance. The flow meter unit 1 is mounted onto the flow tube 13 so that the transducers 2 are placed in the same plane in manner so that a centre axis of the flow tube, the plane of the transducers, and the plane of the PCB of the control circuit all are parallel.

The piezoelectric transducers are operated by the control circuit 8 which based on the involved signals generate a signal or value indicative of the flow rate of the fluid. The level of signal treatment of the control circuit may vary from basic signal treatment, where processed signals are output to a further electronic unit for further signal processing, to a complete signal treatment resulting in the determination of the flow rate. Such further electronic unit may be part of the flow meter unit 1, i.e. the PCB may comprise additional electronic devices or circuitry, or may be part of a separate calculator circuit (not shown) communicatively connected to the flow meter unit.

An important advantage of the present invention is the ability of manufacturing an entire working flow meter unit on a single PCB as a single SMD unit by use of a single SMD pick-and-place robot, which without further manufacturing steps can be attached to a flow tube in direct contact with the flowing medium and tested.

The flow meter unit may be fabricated in the SMD pick-and-place robot by conducting the following general steps.

In a first step a printed circuit board is populated with component in a surface mount process to provide an electronic circuit suitable for operating ultrasonic transducers. The circuit board comprises conducting paths for electrically connecting the electronic circuit to at least one terminal of the transducers (when mounted).

In a next step (which in principle also could be the first step) ultrasonic transducers in the form of monolithic bodies of piezo-electric material are mounted onto the circuit board by soldering one side of the transducers to the PCB.

In further step, a membrane is mounted onto the transducer. The transducer may be mounted by first disposing an adhesive layer on the transducer, e.g. a layer of solder and subsequently place the membrane, or the membrane may be pre-disposed with an adhesive layer, so that the robot places the membrane with adhesive on the transducer.

In an alternative step, the membrane is pre-mounted onto the transducer, so that the robot places the transducer with a pre-mounted membrane onto the PCB.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

## Claims

1. An ultrasonic flow meter unit (1) arranged to measure a flow rate of a fluid, the meter unit comprising:
- a first ultrasonic transducer (2) in the form of a monolithic body of piezo-electric material, the first ultrasonic transducer has a first (3) and a second side (4), and a first and second electrical terminal, and
- a printed circuit board (5) with an electronic circuit (8) for operating the first ultrasonic transducer, the circuit board comprises a first conducting path electrically connected to the first electrical terminal and to the electronic circuit, and
wherein the ultrasonic transducer is mechanically fixed to the circuit board by a first electrically conducting fixing means which provides the electrical connection between the first electrical terminal and the first conducting path, and
wherein the first ultrasonic transducer is positioned on the printed circuit board with the first side of the transducer in contact with printed circuit board, and with the second side of the transducer being covered by a membrane (9) adhered to the second side (4).

2. Ultrasonic flow meter according to claim 1, wherein the membrane is electrically connected to the second electrical terminal.

3. Ultrasonic flow meter according to any of the preceding claims wherein the membrane is disc shaped to cover the second side of the transducer.

4. Ultrasonic flow meter according to any of the preceding claims wherein the membrane is bowl-shaped to cover at least the second side of the transducer and the peripheral side (29) of the transducer.

5. Ultrasonic flow meter according to any of the preceding claims wherein the first ultrasonic transducer is positioned on a first side (6) of the printed circuit board and the electronic circuit for operating the first ultrasonic transducer is positioned on a second side (7) of the printed circuit board, and where the printed circuit board comprises a through going hole, and wherein the conductive path extent through the through going hole from the first side to the second side.

6. Ultrasonic flow meter according to any of the preceding claims wherein the membrane is adhered to the second side of the transducer by use of solder or by use of glue.

7. Ultrasonic flow meter according to any of the preceding claims wherein the membrane is a sheet of metal.

8. Ultrasonic flow meter according to any of the preceding claims wherein the membrane is a layer deposited onto the second side of the transducer.

9. An ultrasonic flow meter arranged to measure a flow rate of a fluid, the flow meter comprising:
- a flow tube (10, 11, 13) with a through-going flow passage for passage of a fluid between an inlet and an outlet, and at least one through-going opening (14) arranged in a wall of the flow tube for providing an opening into the flow passage;
- an ultrasonic flow meter unit (1) according to any of the preceding claims arranged in relation to the flow tube so that the first ultrasonic transducer is arranged in the through-going opening in the wall of the flow tube.

10. The ultrasonic flow meter according to claim 9, wherein a sealing element (15) is provided between a front side of the membrane and the flow tube.

11. The ultrasonic flow meter according to any of the claims 9 or 10, wherein a sealing element (15) is provided between a circumferential part of a bowl-shaped membrane and the flow tube.

12. A method of manufacturing an ultrasonic flow meter unit, the method comprising
- providing a first ultrasonic transducer in the form of a monolithic body of piezo-electric material, the ultrasonic transducer has a first and a second side, and a first and second electrical terminal,
- providing a printed circuit board with an electronic circuit for operating the first ultrasonic transducer, the circuit board comprises a first conducting path electrically connected to the first electrical terminal and to the electronic circuit,
- mounting the first side of an ultrasonic transducer with a membrane adhered to the second side onto the printed circuit board, or mounting the first side of the ultrasonic transducer onto the printed circuit board and adhere a membrane to the second side of the ultrasonic transducer,
- wherein the ultrasonic transducer is mechanically fixed to the circuit board by a first electrically conducting fixing means which provides the electrical connection between the first electrical terminal and the first conducting path.

13. Method according to claim 12, wherein the steps are performed in a Surface Mounting Technology process.

14. Method according to the claims 12 or 13, wherein the membrane is adhered to the second side of the ultrasonic transducer in a pre-mount step.

15. Method of manufacturing a flow meter, the method comprising
- manufacturing an ultrasonic flow meter unit according to any of claims 12 to 14, and
- mounting the ultrasonic flow meter unit in relation to a flow tube.
